# EUROPEAN PATENT APPLICATION

(11) **EP 1 054 555 A2**
(43) Date of publication of application: **22.11.2000**
(21) Application number: 00110090.8
(22) Date of filing: 12.05.2000
(51) Int. Cl.: H04M 11/02

(54) **Intercom system**

(30) Priority: 12.05.1999 IT TO990392
(71) Applicant: Bitron Video S.r.l., 10044 Pianezza (TO) (IT)
(72) Inventor: Bersano, Marco, 10094 Collegno (TO) (IT)
(74) Representative: Dini, Roberto, Dr. Ing.

(57) **Abstract**

An intercom system comprising an external station, which comprises in turn calling means and means for generating a ring signal, apt for producing and sending an electric signal, in response to operation of said calling means, to a plurality of internal intercoms apt to receive said electric signal and send it to means for acoustical amplification and reproduction contained in said internal intercoms. According to the invention, the electric signal generated by the ring signal generating means (DDD) is a signal with a predetermined duration and that selecting means (C, RL1) are provided, which are apt to establish connection of the means for acoustical amplification and reproduction (SP1) of the internal intercom (CI) selected through the calling means (KEY) to the ring bell signal generating means (DDD) and maintain connection for the whole predetermined duration of the electric signal generated in the external station (PE).

## Description

The present invention relates to an intercom system comprising an external station, which comprises in turn calling means and means for generating a ring signal, apt for producing and sending an electric signal, in response to operation of said calling means, to a plurality of internal intercoms apt to receive said electric signal and send it to means for acoustical amplification and reproduction contained in said internal intercoms.

As known, the primary purpose of intercom systems is to inform a house inhabitant of a visitor standing at the street door. To this purpose sound generating devices are provided, which generate a sound signal within the house when a visitor presses a corresponding push-button on the external station.

In simplest instances, said sound signal is generated by an electromechanical buzzer located inside the house, commanded by pushing the call button on the external station.

More recently a solution has come to be accepted, providing for generating an electric or electronic signal by means of circuits located in the external station, then sending said electric signal through the connection wires to the internal intercom and having such an electric signal reproduced by the loudspeaker located in the internal intercom.

Said electric signal should be a periodic signal of fixed frequency and amplitude with a very short period, since this period has to be finished in the few instants taken by the external user to push the call button. In fact, in known intercom systems, by releasing the call button the emitted electric signal is also cut off inside the house.

Ring bells for intercom systems are also known, which are apt to generate a melody, i.e. a signal of predetermined duration containing a sequence of sounds at different pitches, said sequence not being normally a periodical one. This type of ring bell is also called carillon or "chime". Said ring bells are obviously more valued and expensive; they are incorporated in internal intercoms so as to be operated the same way as buzzers by the call signal, the latter having as said a short duration, and they emit the melody for a predetermined time lasting longer than the call signal. Therefore, the use of said ring bells in systems providing many internal intercoms is particularly expensive. Moreover, in order to operate these ring bells a local supply, i.e. a battery or a supply, or still installation of an extra common supply conductor from a common supply source is required.

It is the object of the present invention to solve the above drawbacks and provide an intercom system, having a more efficient and improved performance.

In this frame, it is the main object of the present invention to provide an intercom system allowing for using a signal with predetermined duration and longer duration than the call signal, for use as a low cost call signal in apartment houses without requiring a dedicated supply.

A further object of the present invention is to provide an intercom system, which allows reproduction of a predetermined melody or composition in the apartments.

A further object of the present invention is to provide an intercom system, which does not require installation of additional connecting conductors with respect to the existing system.

In order to achieve such aims, it is the object of the present invention to provide an intercom system and/or a method for installing intercom systems incorporating the features of the annexed claims, which form an integral part of the description herein.

Further objects, features and advantages of the present invention will become apparent from the following detailed description and annexed drawings, which are supplied by way of non limiting example, wherein:
- Fig. 1 shows the basic diagram of an intercom system according to the present invention;
- Fig. 2 shows the basic diagram of another embodiment of the intercom system of Figure 1.

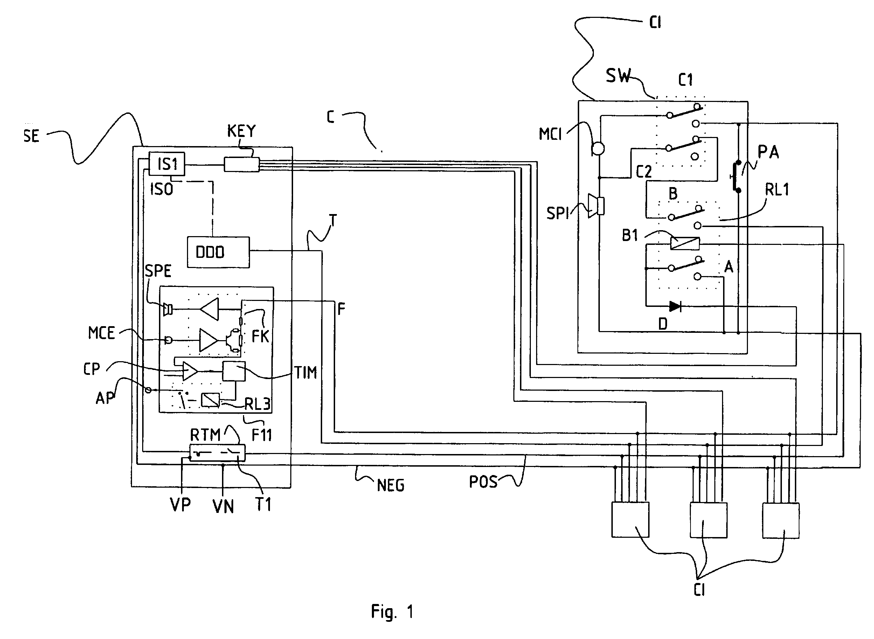

In Figure 1 a basic diagram of an intercom system is represented according to the present invention, which comprises an external station SE and internal intercoms CI. To facilitate this representation only four internal intercoms CI are shown, one of which alone is detailed. Said internal intercom CI is connected to a voice wire F, a tone wire T, a positive supply wire POS, a call wire C, a negative supply wire NEG.

The internal intercom CI has the voice wire F connected through a first switch C1 of a switch block SW to a loudspeaker SPI and microphone MCI. Said switch block SW switches its contacts as to whether a microtelephone, not shown here, is in stand-by position or not, i.e. hanged up. The voice wire F is also connected to an enabling button of the electric door lock PA.

The tone wire T is connected to a loudspeaker SPI through a contact B of a relay RL1 and a second switch C2 of the switch block SW. The positive supply wire POS is connected to a first pole of a magnet coil B1 of said relay RL1. The call wire C is connected through a protection diode D to the second pole of the magnet coil B1. The negative supply wire NEG, which is the return conductor of all signals (ground), is connected through a contact A of the relay RL1 to the second pole of the magnet coil B1.

The external station SE comprises a voice circuit F11, which uses the known 1+1 wire technique, i.e. a voice circuit employing a circuit functionally similar to a hybrid coil, also called fork circuit EK to send in bi-directional mode the audio signals received and transmitted through a loudspeaker SPE and a microphone MCE on the sole voice wire F.

Moreover, an opening circuit BAP associated to the fork circuit FK comprises a voltage comparator CP for activating a timer circuit driving a relay RL3, which is able to operate a likely electric door-lock connected to the terminal AP when the voltage on the voltage comparator CP falls below a reference voltage in consequence of the acivation button of the electric door lock PA having been pushed on one of the internal intercoms CI. The voice circuit F11 is anyway a known circuit and does not require to be further detailed herein.

Four call wires C depart from the external station SE, one for each internal intercom CI. A current sensing circuit IS1 is provided in the external station SE upstream a call keyboard KEY, wherefrom the call wires C are departing. A melody sound generator DDD, such as obtained through a SAE800 circuit, is also provided. The output of said melody sound generator DDD, possibly amplified, is connected to the tone wire T. The melody sound generator DDD is controlled by a control output ISO of the current sensing circuit IS1.

The external station SE is supplied by an appropriate power supply not shown here, through a positive supply terminal VP and a negative supply terminal VN, from which also the supply to internal intercoms CI is extracted through the positive supply wire POS and the negative supply wire NEG. Moreover, a timed reset circuit RTM is inserted on the positive supply wire POS upstream the output towards the intercoms CI, and comprises a timer switch T1 for cutting off the supply on the positive supply wire POS.

Whenever a key of the call keyboard KEY is pressed, the call wire C corresponding to a specific internal intercom CI is brought to the negative supply voltage. Therefore, the relay RL1 in the internal intercom CI is energized, being the coil B1 connected between the positive supply wire POS and call wire C. Following said energization, the contact B closes on the tone wire T, whereas the contact A will close on the negative supply wire NEG. As a result the contact A operates like a self-retaining contact, i.e. it maintains the relay RL1 energized also after the key of the call keyboard KEY has been released, since the coil B1 remains always connected from a positive voltage to a negative voltage. The current sensor IS1, on the contrary, is such that upon sensing the current flow on the call wire C it will operate the melody generator DDD through its control output ISO. Therefore, the melody generator DDD sends a melody, i.e. an appropriately modulated electric signal of predetermined duration through the tone wire T, which is thus connected to the loudspeaker SPI by the contact B of the relay RL1 and switch C2 of the switch block SW. In fact, as it can be clearly see from figure 1, the switch block SW is such that when the first switch C1 disconnects the voice wire F, the second switch C2 creates an electric path starting from the relay RL1 to the loudspeaker SPI. It should be noticed that the internal intercom CI called by the corresponding key on the call keyboard KEY and the call wire C connected to it is the only one with an energized relay RL1, so that the melody transmitted by the melody generator DDD - even if sent to all four represented internal intercoms CI - can only be reproduced by the loudspeaker SPI of said internal intercom CI.

When the melody has been generated for the predetermined time, the timed reset circuit RTM will cut for a short instant through the timed switch T1 the voltage on the supply wire POS, thus allowing deactivation of the coil B1 of the relay RL1. Thus, the internal intercom CI is ready for a new call and will not reproduce a melody sent following a call to another intercom.

Therefore, the intercom system according to the present invention uses a bi-directional communication system through the fork circuit FK; however, the latter is particularly suited to be implemented in places where a so called 4+n intercom system already exists. In fact, a 4+n intercom system comprises a common ground wire, a common wire for door opening, a common wire for the ascending voice, a common wire for the descending voice, forming a so called column wire, i.e. the common wires to all internal intercoms inside the building, and n call wires, with its integer n corresponding to the number of internal intercoms. Therefore, should a 4+n system already exist, installation of an intercom system according to the present invention will require the following steps:
- replace the pre-existing intercoms with internal intercoms CI;
- replace the pre-existing external station with the external station SE;
- use the pit-existing n call wires for the call wires C;
- use the four pre-existing column wires for the tone wire T, positive supply wire POS, negative supply wire NEG and voice wire F.

Sometimes it may also be necessary to replace the intercom system supply.

Thus, advantageously, a new wire lay is not required to obtain an intercom system according to the present invention as it will be enough to change the terminals, i.e. the external station SE and internal intercoms CI. Moreover, save for particular circumstances, the same supply can be used and it is not necessary, anyway, to add a supply or special supply line for the melody sound generator DDD.

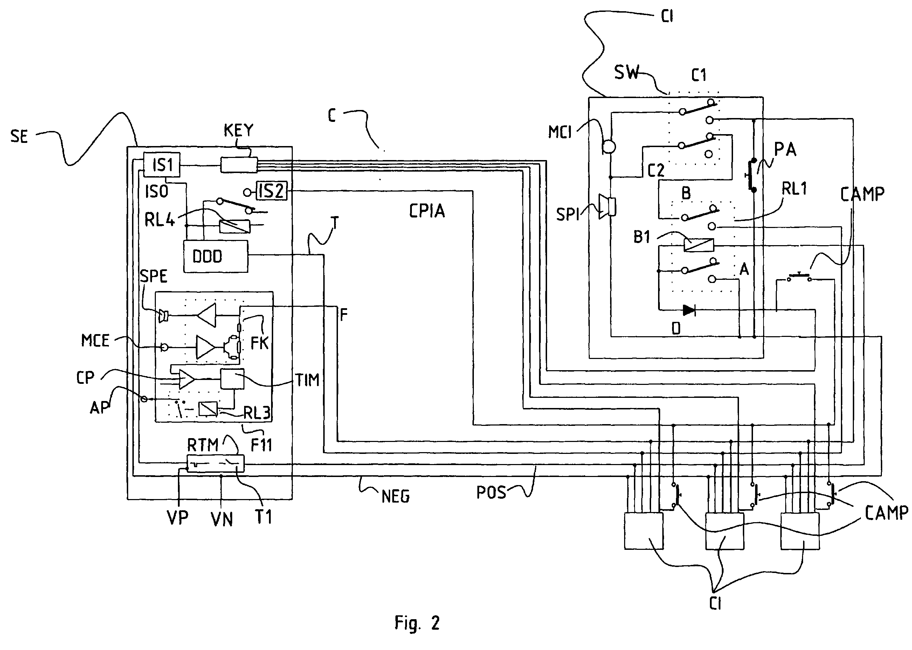

Figure 2 represents another embodiment of the intercom system of Figure 1. All common elements of the intercom system shown in Figure 1 bear the same references.

In particular, the intercom system represented in Figure 2, has a floor call wire CPIA departing from the external station SE from a second current sensor IS2, similar to the current sensor IS1. Said floor call wire CPIA is connected to a ring bell on the entrance door of each apartment by means of floor call keys CAMP. Pressing the floor ring bell CAMP, the floor call wire CPIA is energized and will operate both the relay RL1 in the internal intercom CI and second current sensor IS2 in the external station SE. The second current sensor IS2 senses the current flow and controls the melody sound generator DDD to have it generating a second melody different from the one indicating a call from the call keyboard KEY of the external station SE.

Obviously, as it can be seen from the figure 2, the above embodiment requires an additional conductor in the column, the floor call wire CPIA and n floor call buttons CAMP. A further relay RL4, which is energized when pressing a call key KEY cutting off the floor call wire CPIA, causes the call from the external station SE to have priority on the floor call.

Thus, both the call function from outside and floor call function can be associated in just one equipment.

According to the above description the features of the present invention are apparent and also its advantages are clear.

Advantageously, the intercom system according to the present invention allows a cost effective use of a melody, i.e. a predetermined duration signal for the call signal in the apartments, due to the use of a centralized sound generator in the external stations, i.e. a unique sound generator.

Moreover, advantageously, the positioning of just one sound generator in the external station allows for using only one supply.

An additional advantage is represented by the predetermined duration of the signal independently from the duration of the pressure exerted on the call button. This, in fact, avoids both the drawbacks related to too short a pressure, with a consequent risk of not hearing the call, as well as the drawbacks related to too long a pressure, which may be annoying.

Moreover, the intercom system according to the present invention is advantageously compatible for assembly on any 4+n intercom systems already available, resulting more convenient.

It is obvious that many changes are possible for the man skilled in the art to the intercom system described above by way of example, without departing from the novelty spirit of the innovative idea, and it is also clear that in practical actuation of the invention the components may often differ in form and size from the ones described and be replaced with technical equivalent elements.

For example, it will be possible for the sound generator contained in the external station to send signals which instead of a melody or musical piece are song pieces or contain purely vocal messages.

The electric signal transmitted may be coded according to all known audio coding types, such as a coded signal according to MPEG standard.

The sound generator contained in the external station can be further able to send pieces or messages different to each other in conformity by pressing different keys or combinations of various keys on the external call keyboard.

## Claims

1. An intercom system comprising an external station, which comprises in turn calling means and means for generating a ring signal, apt for producing and sending an electric signal, in response to operation of said calling means, to a plurality of internal intercoms apt to receive said electric signal and send it to means for acoustical amplification and reproduction contained in said internal intercoms, characterized in that the electric signal generated by the ring signal generating means (DDD) is a signal with a predetermined duration and that selecting means (C, RL1) are provided, which are apt to establish connection of the means for acoustical amplification and reproduction (SPI) of the internal intercom (CI) selected through the calling means (KEY) to the ring bell signal generating means (DDD) and maintain connection for the whole predetermined duration of the electric signal generated in the external station (PE).

2. An intercom system according to claim 1, characterized in that the electric signal is sent over a tones wire (T) common for all internal intercoms (CI).

3. An intercom system according to claim 2, characterized in that the selecting means (C, RL1) comprise connecting means (RL1) located in the internal intercom (CI) and operated by the call means (KEY).

4. An intercom system according to claim 2, characterized in that the external station (SE) comprises a sensing means (IS1) apt to identify a call operation by the call means (KEY) and operate the predetermined duration ring signal generating means (DDD).

5. An intercom system according to claim 4, characterized in that said sensing means (1S1) is a current sensing means, which detects the current flow in the call wires (C) connected to the call keys (KEY).

6. An intercom system according to claims 1 to 5, characterized in that the external station (SE) and internal intercoms (CI) are connected by means of a conductors set (F, C, POS, NEG) comprising the same number of conductors typical for a 4 + n wires system.

7. An intercom system according to claims 1 to 6, characterized in that the external station (SE) and internal intercoms (CI) comprise transceiving means (EK, BAP, SW) for bi-directional systems implemented on said conductors set.

8. An intercom system according to claim 6, characterized in that the external station (SE) is connected to the internal intercoms (CI) through an additional wire for the floor call (CPIA), that the external station comprises a second sensing means (IS2) operating on said floor call wire (CPIA) for controlling operation of the predetermined duration ring signal generating means (DDD).

9. An intercom system according to claim 8, characterized in that the internal intercom (CI) provides a floor call wire (CAMP) apt to energize said additional floor call wire (CPIA) and switch the selecting means (RL1) in the internal intercom (CI).

10. An intercom system according to claim 3, characterized in that the external station (SE) comprises reset means (RTM) apt to reset the connecting means (RL1) when the predetermined duration ring signal generating means (DDD) have finished emitting the electric signal.

11. An intercom system according to claim 3, characterized in that the connecting means provide a self-retaining contact (A).

12. An intercom system comprising an external station (SE), which comprises in turn call means (KEY), a plurality of internal intercoms (CI), a predetermined duration sounds generator (DDD) apt to emit a predetermined duration signal in response to operating the call means (KEY), characterized in tat the predetermined duration sounds generator (DDD) is located in the external station (SE), and control means (IS1) are provided for operating said predetermined duration sounds generator (DDD) in response to a call operated through said call means (KEY) and selecting means (RL1, C) for connecting the sole internal intercom (CI) assigned by said call operation to the predetermined duration sounds generator.

13. A method for installing an intercom system having a centralized predetermined duration sound generator on an already available intercom system fitted with a 4+n wires conductors set, said method characterized by:
- fitting the internal intercoms and external station with transreceiving means (FK, BAP, SW) for bi-directional intercom systems;
- Utilizing said 4 + n wires conductors set for connecting both the internal intercoms and external station.

14. A method for installing an intercom system having a central predetermined duration sound generator on an already available intercom system with a 4 + n wires conductors set, according to claim 13, said method characterized by the steps of:
- replacing the pre-existing intercoms with internal intercoms for bi-directional systems;
- replacing the already available external station with an external station fitted with transmission and receiving means for bi-directional systems (FK, BAP);
- utilizing said n wires pertaining to the 4 + n wire conductors set for the call wires (C);
- utilizing the positive supply wire (POS), negative supply wire (NEG), voice wire (F), four column wires already available for the tone wire (T).

15. An intercom system according at least to one of the previous claims, characterized in that the predetermined duration electric signal is either a melody or a musical piece.

16. An intercom system according at least to one of the previous claims, characterized in that the predetermined duration electric signal comprises voice signals.

17. An intercom system according to claim 15 or 16, characterized in that the predetermined duration sounds generator (DDD) generate different signals corresponding to different operations of the call means (KEY).
